# EUROPEAN PATENT APPLICATION

(11) **EP 2 846 273 A1**
(43) Date of publication of application: **11.03.2015**
(21) Application number: 14180107.6
(22) Date of filing: 06.08.2014
(51) Int. Cl.: G06F 17/30, G06F 21/53

(54) **Methods and systems for searching software applications**

(30) Priority: 07.08.2013 US 201361862967 P
(71) Applicant: Fiiser, Inc., Taipei City 115 (TW)
(72) Inventor: Lin, Hsiu-Ping, 100 Taipei City (TW); Wu, Chi-Jen, 709 Tainan City (TW)
(74) Representative: Lang, Christian

(57) **Abstract**

A method for searching for software applications (or apps) is provided. In the method, one or more software applications are scheduled for execution according to a scheduling policy. The software applications are executed according to the scheduling policy. Application data of the software applications is collected. The collected application data is stored. A query is received. The stored application data is searched. Information regarding software applications whose corresponding stored application data relevant to the query is transmitted.

## Description

### TECHNICAL FIELD

The present invention relates to software applications. Particularly, the present invention relates to systems and methods of providing search engine services to locate the desired software applications.

### BACKGROUND

Search engines are important tools for people to search information online. Also, mobile applications (hereinafter referred as "app or apps") have become popular due to the widespread use of smartphones. Today, apps are either preloaded in the mobile devices or downloaded from the Internet. Application distribution platforms such as Apple's "APP store", Google's "Google Play" or Tencent's "bao.myapp.com" (hereinafter referred as "app stores") allow users to browse and download apps of their interests. An app store typically organizes apps into categories and provides conventional search utilities to allow users to find desired apps by keyword search. Such conventional search utility in an app store looks into an app's title and description, which are usually prepared by the app developer, for a match with the keyword(s) entered by a user. Some App App stores even provide web interfaces, such as "Edit Application" in Google Play and "Manage Your Apps" in Apple's App Store, for developers to upload and edit the titles and descriptions of their apps.

When an app is installed and run, it generates data (hereinafter referred as "application data") which can be dynamic in nature in addition to static data (such as the title or description of the apps). Specifically, when an app is running on a mobile device, the app generates application data depending on various triggers, such as but not limited to behavior of the app user. For example, if a user wants to check the weather forecast using a weather app, the user can input his/her location of choice in the app interface. The weather app will deliver the relevant application data, in this case the weather forecast of the user's location. In other words, application data can be dynamic based on user's operation of the app, and can either be sourced from one or more application servers associated with the app or created by the app itself.

As stated above, conventional search utilities found in the App Stores are limited to keyword search of the static data. The scope of the search does not extend to the application data. In other words, conventional search utilities can neither search "into" an application package file relating to the app (e.g., an apk file or an ipa file), nor can it search the application data generated after the application package file is being or has been executed on a user's electronic device. This means that application data generated by the app in response to a user's input of the app may never be found or searched by another user who may find such information valuable.

### BRIEF SUMMARY

A system for searching for software applications (or apps) is disclosed. The system includes one or more software applications, one or more servers, one or more schedulers, one or more databases, one or more computer programs, and one or more search engines. The one or more servers are configured to execute the one or more software applications. The one or more schedulers are configured to schedule the one or more servers to execute the one or more software applications according to a scheduling policy. The one or more computer programs are configured to collect application data of the one or more software applications and to store the collected application data in the one or more databases. The one or more search engines are configured to provide search services for searching for software applications using the application data collected and stored in the one or more databases.

A method for searching for software applications is disclosed. In the method, one or more software applications are scheduled for execution according to a scheduling policy. The one or more software applications are executed according to the scheduling policy. Application data of the one or more software applications is collected. The collected application data is stored. A query is received. The stored application data is searched. Information regarding software applications whose corresponding stored application data relevant to the query is transmitted.

A method for searching for applications is provided. In the method, at least one software application is scheduled for execution according to a scheduling policy. The at least one software application is executed. Application data from the at least one software application, from a data harvest module coupled with the at least one software application and/or from an application server coupled with the at least one software application is collected. The collected application data is stored. A query is received. The stored application data is searched. Information regarding software applications whose corresponding stored application data is relevant to the query is transmitted.

A method for searching for applications is provided. In the method, application data of software applications from one or more application servers is collected. The collected data is stored. A query is received. The stored data is searched. Information regarding software applications whose corresponding collected data is relevant to the query is transmitted.

### BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, some preferred embodiments are shown in the drawings. It should be understood, however, that the present invention is not limited to the precise arrangements and instrumentalities shown. In the drawings:
FIG. 1 is a conceptual diagram illustrating a networked system for searching apps based on application data according to an embodiment of the present invention;
FIG. 2 is a diagram illustrating a networked system for searching apps based on application data according to an embodiment of the present invention;
FIGS. 3A and 3B are diagrams illustrating data structures according to an embodiment of the present invention;
FIGS. 3C and 3D are diagrams illustrating data structures of a logical table and a row of it according to an embodiment of the present invention;
FIG. 4A is a diagram illustrating a networked system for searching apps based on application data according to an embodiment of the present invention;
FIG. 4B is a diagram illustrating a networked system for searching apps based on application data according to an embodiment of the present invention;
FIG. 4C is a diagram illustrating a networked system for searching apps based on application data according to an embodiment of the present invention;
FIG. 4D is a diagram illustrating a networked system for searching apps based on application data according to an embodiment of the present invention;
FIG. 4E is a diagram illustrating a system with data harvest framework according to an embodiment of the present invention;
FIG. 4F is a diagram illustrating a system including a data gathering proxy set up between a server and a network for fetching and/or caching application data according to an embodiment of the present invention;
FIG. 4G is a diagram illustrating a system including a wrapper used in a server for wrapping each app with a runner application program interface (API) according to an embodiment of the present invention;
FIG. 4H is a diagram illustrating a system including a hypervisor module for aiding virtual machines of a server to execute apps according to an embodiment of the present invention;
FIG. 4I is a diagram illustrating a system including a robot module integrating a script, a third module, a second module, and a first module shown in FIG. 4A according to an embodiment of the present invention;
FIG. 4J is a diagram illustrating a system including a scheduler for facilitating execution of apps according to an embodiment of the present invention;
FIG. 4K is a diagram illustrating a system including an app security checking module for checking securities of software applications or apps according to an embodiment of the present invention;
FIGS. 5A to 5E are diagrams illustrating exemplary user interfaces of an app according to an embodiment of the present invention;
FIGS. 6A to 6C are diagrams illustrating exemplary user interfaces of services provided by application search engines according to an embodiment of the present invention;
FIGS. 7A-7H illustrate exemplary embodiments of a system of the present invention utilizing a single virtual machine or multiple virtual machines for executing one or more apps;
FIG. 8A illustrates an OS-concept diagram for a data harvest module in fetching or intercepting application data from system calls on the user-level;
FIG. 8B illustrates an OS-concept diagram for a data harvest module in fetching or intercepting application data from system calls on the kernel-level;
FIG. 9A and FIG. 9B illustrate examples of using the proxies shown in FIGS. 7A-7H to perform task of a data harvest module;
FIG. 9C illustrates a simplified flow chart of a data harvest module or the proxies shown in FIGS. 7A-7H in fetching or intercepting data/contents related to an app according to an embodiment;
FIG. 9D illustrates a simplified flow chart of a scheduler according to an embodiment; and
FIG. 9E illustrates a simplified flow chart of a virtual machine manager according to an embodiment.

### DETAILED DESCRIPTION

Reference will now be made in detail to the examples of the invention, which are illustrated in the accompanying drawings. Wherever possible, the same reference numbers will be used throughout the drawings to refer to the same or like parts.

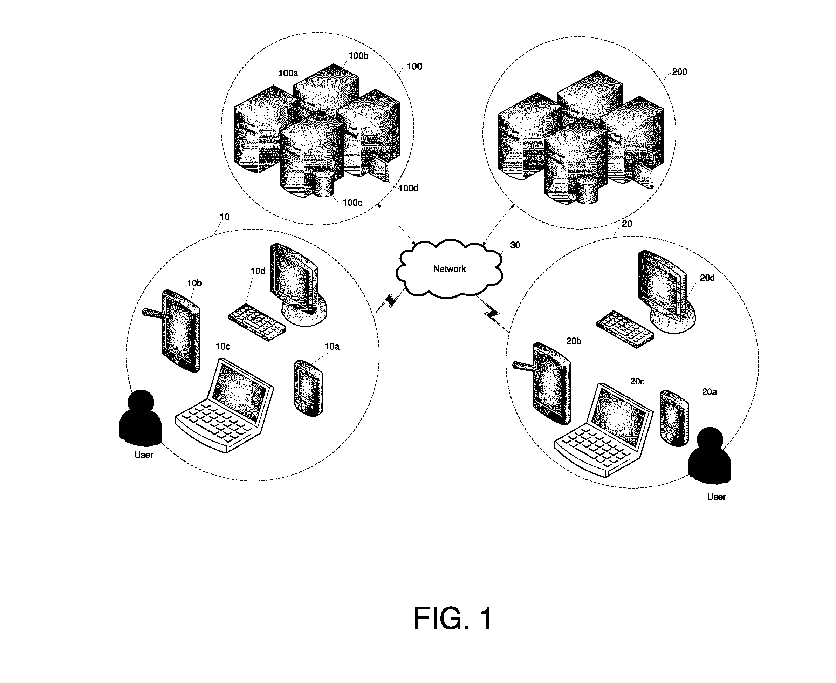

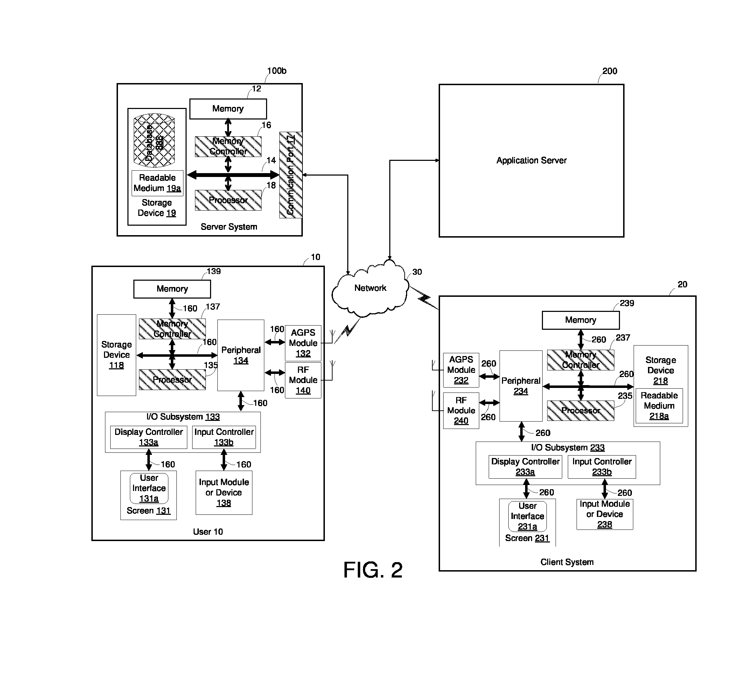

FIG. 1 is a conceptual diagram illustrating a system according to an example of the present invention. The system can include a server cluster 100 (or a cloud), application servers 200, a first user 10 and a second user 20, each of which can communicate with each other through a network 30, which can be but is not limited to the Internet or a cellular network. In this example, the server cluster can include a plurality of servers (e.g., servers 100a-100d shown in FIG. 1), each of which is configured to perform at least a part of the tasks, processes or steps of the present invention, either separately, sequentially, in parallel or a combination thereof to enhance the efficiency of the system. A server in the server cluster 100 can include but is not limited to a processor, a memory, a communication port and a storage device including a database. An example of the server cluster can be described with reference to FIG. 2.

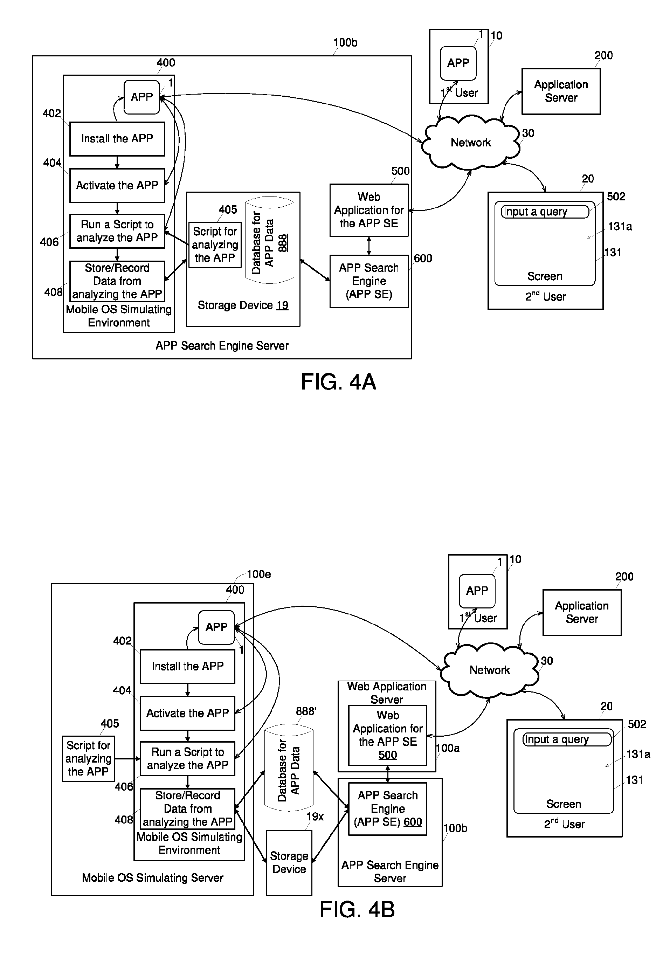

Referring to FIGS. 1, 4A and 4B, the server 100a is configured as a web application server (hereinafter the "web application server 100a") that couples to the server 100b (hereinafter the "application search engine server 100b") to service the first user 10 and the second user 20. The primary function of the web application server 100a is to provide web related utilities to users. For example, web interfaces that allow users to input search requests are provided by the web application server 100a. The primary function of an application search engine server 100b is to provide search engine service to search application data. Note that application data can include but is not limited to characters, attributes, descriptions, serial numbers, identifiers, statistics, historical records, hyperlinks, file paths, audio, video, any other information in searchable formats and any combination thereof.

The web application server 100a can provide (or cause a web browser to show) a search field or a search button 502 on a screen 131 of the first user 10 or on a screen 231 of the second user 20 to allow accesses to the search utilities provided by the application search engine server 100b. A user can input a query through the search field to initiate a search. Those skilled in the art understand the query in this example can be in the form of one or more keywords, images, video streams, audio or a combination thereof. For example, a user can input a keyword into the search field 502 by typing one or more words or pronouncing the one or more words. In another example, the user can press the search button 502 to submit queries in image, video or audio format.

Refer to FIG. 4A, an app can be installed in the application search engine server 100b or first user 10. When the app is installed, activated and run/operated (together hereinafter referred as "executed"), the app can generate application data depending on how the app is operated. The application data can be provided by an application server 200 or generated by the app itself. The application search engine server 100b subsequently collects such application data.

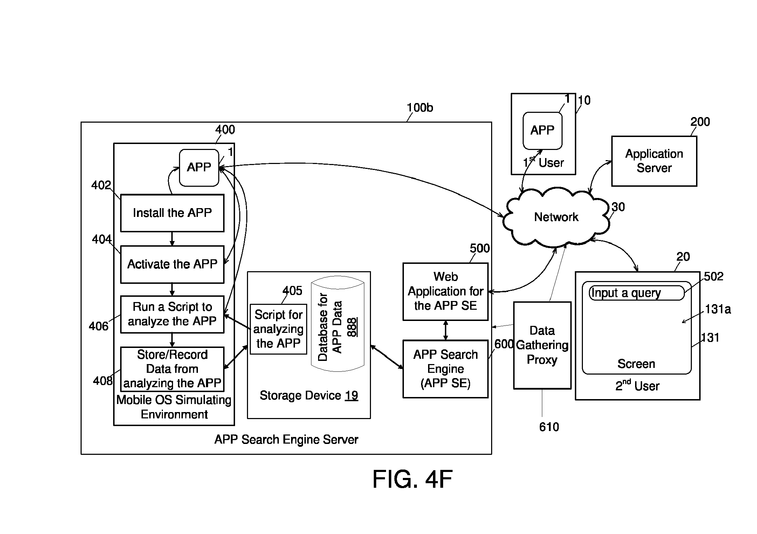

Refer to FIG. 4F, a data gathering proxy 610 can be used between a server (e.g. the application search engine server 100b) and the network 30 to fetch and/or cache the application data according to one embodiment of the present invention. If the data gathering proxy 610 receives a search request from the second user 20, it can look in its local cache of previously saved application data for a match. If a match is found, the data gathering proxy 610 can return the data to the second user 20 without needing to forward the request to the application search engine server 100b.

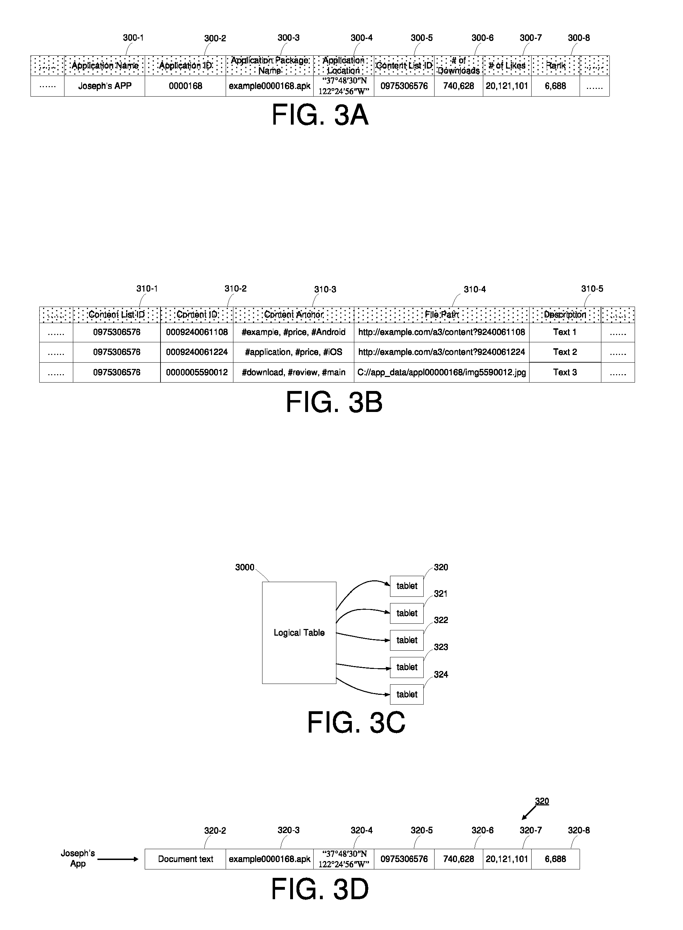

Refer to FIGS. 1 and 4A, application data can be stored in a database either in the web application server 100a or in the application search engine server 100b, as shown in FIGS. 2 and 4A. The application data can be stored as string(s) or binary code(s) in the database. The collected application data can be managed, accessed or queried by the web application server 100a or the application search engine server 100b with programming languages such as SQL, C, C++, or other data management tools. In one example, the string(s) or binary code(s) in the database can be searched based on a query. In another example, pieces of data stored in the database can be associated with one or more unique keys (e.g., a primary key), and specific pieces of data can be located by searching for the keys. Before being stored in a database, the application data can first be organized into a plurality of categories where each category is related to a plurality of keywords (e.g., keywords such as "hotel" and "lodge" are associated with the category "travel"). Data belonging to the same category can be stored and linked to a group of keys having, for example, sequential or related numbers (or having specific numbers such as all even or all odd numbers, all starting/ending with a number like "1", "2", etc., or a specific bit/digit of all the numbers are "1", "2", etc.). When the application search engine server 100b searches for application data relating to a given query, the keys associated with the plurality of keywords that match such given query can be selected first. Subsequently, application data in the database that corresponds with the selected keys is searched for relevance to the query. Note that the collected application data can be stored and searched by using other search engine technologies. In one example, the application data can be stored in a logical table (e.g., BigTable) or a Hadoop file system (HFS) in Hadoop framework. FIG. 3C is a logical table 3000. FIG. 3D illustrates a row 320 of the logical table 3000. Here, application data can be stored in tablets 320-324 in a replicated file system that is accessible by all tablet servers (not shown, e.g., all BigTable tablet servers). Any changes to the tablets are recorded to a transaction log which is stored in a shared file system. In this example, the tablets 320-324 store data immutably (i.e., once the data is written to the logical table 3000, it is never changed). In another example, to allow updates, newer data can be stored in RAM, whereas older data is stored in a series of files in the logical table 3000.

In another example (referring to FIGS. 1 and 4B), the application data can be stored in a standalone database 888'. The database 888' can be managed by the web application server 100a or the application search engine server 100b with programming language such as SQL, C, C++, or other data management languages or tools. The application data stored in the database 888' can be searched by the application search engine server 100b.

Those skilled in the art understand that either the web application server 100a or the application search engine server 100b can by itself provide the abovementioned search functions. Accordingly, web application and search function do not need to be implemented in two separate servers. Moreover, these functions can also be implemented via PaaS, IaaS or SaaS.

In other example (referring to FIG. 1), the server cluster 100 can further include a server 100c (hereinafter the "database management server 100c") configured to either function as a first database, or to perform database management services to a second database (not shown) that couples to server 100C and is used to store application data. For example, the second database can exist in a storage area network (SAN) and the database management server 100c can control the second database in the SAN. The application data stored in the first or second database can be managed by programming language such as SQL, C, C++, or other data management tools (i.e., the first or second database can be controlled and accessed by the database management server 100c when the database management server 100c performs the method of the present invention).

In another example, if the application data is an image, a video, a voice/audio file or text, it can be stored in a storage device (not shown) of the web application server 100a, a storage device 19 of the application search engine server 100b (See FIG. 2), a storage device (not shown) of the server 100c (See FIG. 1), or a storage device 19 coupled to the server 100a or 100b or 100c (See FIG. 4B). A corresponding file name, title, description or anchor (see e.g., FIG.3A or 3B) of such data can be stored as a string(s) in the database of the web application server 100a, in the database of the application search engine server 100b or in the abovementioned first database or the second database to allow search.

In one example, each string(s) corresponding to the image, video, voice/audio file or text can also have a file path stored in the database to indicate the location of the data. For example, the server cluster 100 can further include a server 100d (hereinafter the "file management server 100d", see FIG. 1) that can couple with the servers 100a, 100b or 100c and perform file management services. A file with its string(s) matching the keyword will be presented as a search result. The file is retrieved via a path corresponding to its string(s) when the string(s) matching the keyword is found in the database.

Those skilled in the art understand that the server(s) 100a, 100b and/or 100c can also perform file management services to the storage (or the NAS).

In another example, a plurality of servers is configured to work in parallel to scale up the server cluster 100 to provide services to a large amount of the clients in a network. Here, storage devices and databases coupled to the abovementioned server(s) could also be scaled up.

Moreover, data traffic into or services provided by the server(s) 100a, 100b, 100c and 100d can be controlled by a load-balance module or server (not shown). One skilled in the art understands that the method(s) of the present invention is not limited to the number of the servers in the server cluster 100.

In another example, a single server is configured to perform all the tasks and processes on the server side of the network as shown in FIG. 1. Such a single server can replace the server cluster 100 if the amount of application data is small and the tasks required to run by the server are simple.

It is also feasible that the servers 100a to 100d can swap their roles dynamically. The servers in the server cluster 100 can swap the task(s), process(s) or step(s) among each other and still maintain the integrity of the system.

The first user 10 can execute either apps running on a computing device to request application data from the relevant application server or cloud. The computing device can be but not limited to a smart-phone 10a, a tablet (or a "pad") 10b (collectively referred as mobile devices), a laptop 10c or a personal computer 10d, a smart television, a TV game console, a car computer or a driving recorder. Similarly, a second user 20 can operate the same apps in a computing device as described above. One skilled in the art understands that it is not necessary to have a human to operate the apps in order to obtain application data. A machine, program or robot configured to automatically execute the apps is also possible.

FIG. 2 illustrates a system with an application search engine server 100b, the application server 200, a first user 10 and a second user 20. The application search engine server 100b can include but is not limited to a memory 12, a data path 14, a memory controller 16, a communication port 17, a processor 18 and a storage device 19. In one example, the storage device 19 can include a database 888. Note that the database 888 or the storage device 19 can also be configured to exist outside the server system but couples with the application search engine server 100b.

The first user 10 or the second user 20 can each include a memory 139 or 239, a data path 160 or 260, a memory controller 137 or 237, a processor 135 or 235, a storage device 118 or 218, a peripheral 134 or 234, an AGPS (Assisted Global Positioning System) module 132 or 232, an RF (Radio Frequency) module 140 or 240, an I/O system 133 or 233 including a display controller 133a or 233a and an input controller 133b or 233b, a screen 131 or 231 including a user interface 131a or 231a, and an input module or device 138 or 238. In one example, the storage device 118 or 218 can include a computer-readable medium 118a or 218a respectively. In another example, the storage device 118 or 218 can also be treated as a computer-readable medium.

A virtual machine is a software implementation of a computing environment in which an operating system or program can be installed and run. The virtual machine typically emulates a physical computing environment, but requests for CPU, memory, hard disk, network and other hardware resources are managed by a virtualization layer which translates these requests to the underlying physical hardware. Virtual machines are created within a virtualization layer, such as a hypervisor or a virtualization platform that runs on top of a client or server operating system. This operating system is known as the host OS. The virtualization layer can be used to create many individual, isolated virtual machine environments. Virtual machines can provide numerous advantages over the installation of OS's and software directly on physical hardware. Isolation ensures that applications and services that run within a virtual machine cannot interfere with the host OS or other virtual machines. Virtual machines can also be easily moved, copied, and reassigned between host servers to optimize hardware resource utilization.

Apps can be executed by the first user 10 to generate application data. Apps can also be executed on the servers or virtual machines of the system of the present invention to generate application data. Since apps may be operating-system-specific, i.e., certain apps may only be executed in a specific type of OS, it is essential that this OS-specific information for a given app be acknowledged in order for the app to be successfully executed. In one example, the server (e.g., the application search engine server 100b) may obtain the operating-system-specific information of apps so that the system of the present invention knows in which environment the apps are to be executed.

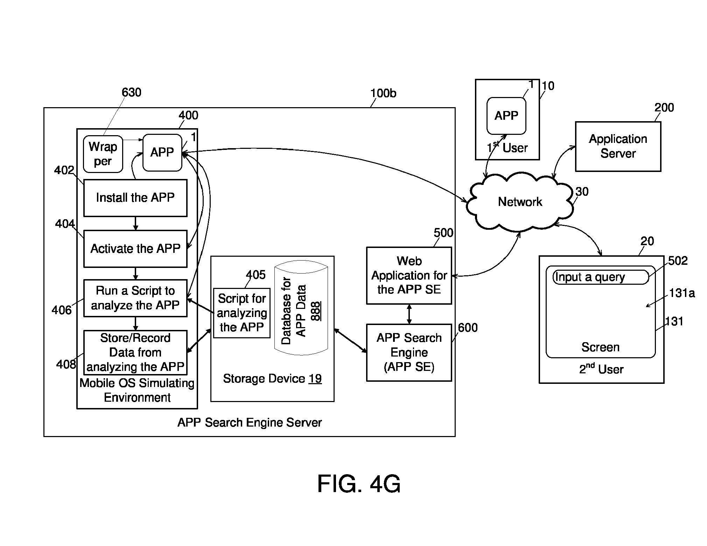

In another example, as exemplified in FIG. 4G, a wrapper 630 may be further utilized by the server (e.g., the application search engine server 100b) to wrap each app (or apk of app) with a runner application programming interface (API). With the aid of the runner API, the server can obtain the operating-system-specific information of the apps so that the system of the present invention knows in which environment the apps are to be executed.

In another example, the runner API can be directly utilized to aid one or more virtual machines of the server to obtain the operating-system-specific information of apps so that the system of the present invention knows in which environment the apps are to be executed.

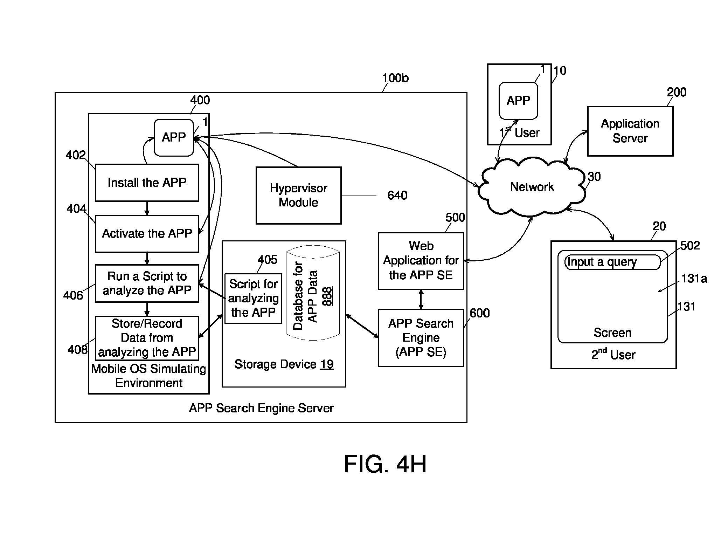

In another example, as exemplified in FIG. 4H, a hypervisor module 640 may be utilized by the server (e.g., the application search engine server 100b) to control the number of virtual machines executing the apps. For example, the hypervisor module 640 can generate, delete, activate or de-activate virtual machines. The hypervisor module 640 can act as an administrative tool that manages the resources of the virtual machines so that the apps may be effectively executed.

In another example, the hypervisor module 640 is a kernel-based virtual machine (KVM), and the KVM is configured to simultaneously run multiple virtual machines having different operating systems without changing the image files of the operating systems. With the aid of the KVM, customized running environments with different operating systems (on different virtual machines) can be simultaneously provided.

The application data can be provided by the application server 200 or by the app itself. The application data is stored in the database 888. The second user 20 can conduct a search via a user interface 231a. The application search engine server 100b can conduct the search and transmits the search result to second user 20.

Those skilled in the art understand that the elements, modules or devices described in the systems above can be integrated into one module or a single chip. Moreover, the server system in the application search engine server 100b, the first user 10 and the second user 20 can couple with each other by the Internet 30. Furthermore, server system(s) in the server 100a, 100c or 100d can also include the same elements, modules or devices as those shown in FIG. 2.

### Database

FIG. 3A and 3B illustrate exemplary data structures of the database 888 or 888' according to an example of the present invention. In this example, the database 888 or 888' is a relational database. Referring to FIG. 3A, the data structure include but is not limited to a first field 300-1 to store the name of an app 1, a second field 300-2 to store the application ID used to identify the app 1, a third field 300-3 to store the file name or the name of an application package of the app 1, a fourth field 300-4 to store the location of the app 1, a fifth field 300-5 to store the content list ID, a sixth field 300-6 to store the number of downloads for the app 1 or a seventh field 300-7 to store the number of likes for the app 1. Moreover, FIG. 3B represents one of exemplary data structures for content list ID stored in 300-5 referred in FIG. 3A. Those skilled in the art understand that some fields shown in FIGS. 3A and 3B are optional.

In another example, the data structure in the database 888 or 888' can be implemented as a logical table 3000 or and HFS illustrated in FIGS. 3C or/and 3D, wherein each data in the HFS or the logical table 3000 is a key-value pair (or a key-data pair, where, e.g., the name of the App, "Joseph's App," can be the key to the data in FIG. 3D).

### Application Search Engine

FIG. 4A illustrates a system for searching application data according to an example of the present invention. Referring to FIG. 4A, the system can include the application search engine server 100b, the first user 10 and the application server 200. The application server 200 can communicate with the app 1 to provide dynamic and/or real-time data in addition to static data. In this example, the application search engine server 100b can include a virtual machine 400, a web application 500, an application search engine 600 and the storage device 19. The virtual machine 400 is an operating system (OS) simulating environment capable of hosting apps. In other words, apps can be executed on the virtual machine 400 just like how they are executed on a mobile device.

In other example, a bare machine approach can also be applied for hosting apps in the server 100b or 100e. When applying the bare machine approach, a program (not shown) configured as an interface between the server 100b or 100e and the hosted apps can be used to translate system calls of the hosted apps into machine codes and directly feed the machine codes into the server 100b or 100e for dealing with all communication between the server 100b or 100e (or the app server 200) and the hosted apps (e.g., sending a request, receiving application data, etc.).

In one example, an application package for the app 1 can be downloaded from the application server 200 or other data locations (not shown, for example, an application store/market such as the "APP Store" or the "Google Play") that either store the application package or can provide a download link relating to the application package.

In one example, the virtual machine 400 can include a first module (or program) 402 configured to install an application package in the virtual machine 400. Here, the virtual machine 400 can further include a second module (or program) 404 configured to execute the app 1. The second module 404 can either continuously or periodically execute the app 1. In one example, if more than one apps are running on the virtual machine 400, the second module or program 404 can execute all the apps either sequentially, in random, or in parallel, depending on the policies and rules set in the second module 404.

In another example, the virtual machine 400 can further include a third module (or program) 406 configured to analyze the executed the app 1. This module determines how the app 1 communicates with application server 200. For example, the third module 406 can inspect the different functions that the app 1 offers and how such functions can be executed to request application data from the corresponding application server 200. Subsequent to such analysis, a script (405) can be programmed to automatically and systematically execute the app 1 to generate application data.

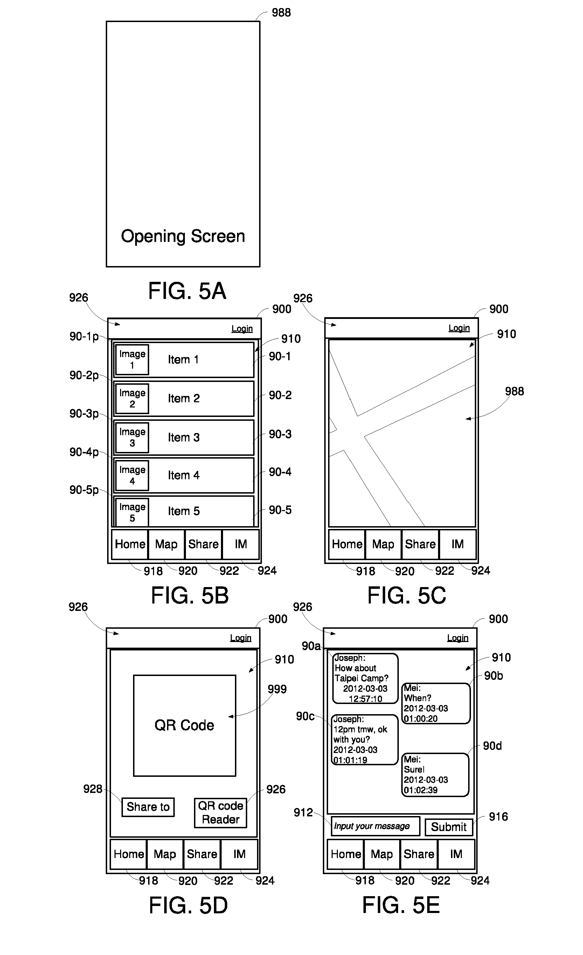

FIGS. 5A-5E are exemplary user interfaces for the app 1. In this example, the app 1 provides a function to request data from its associated application server 200 when the item(s) (e.g., 90-1) is touched or clicked, as shown in FIG. 5B. Here, the third module 406 can analyze the user interface to determine the locations and functions of the items 90-1 to 90-5. And a script 405 can be executed to simulate the behaviors of an app 1 user, such as clicking or touching the item 90-1, to request data from the application data 200. One example is to program the script 405 in the application search engine server 100b (or the third module 406) when third module 406 is analyzing the app 1. In another example, the script 405 can be stored in the storage device 19 of the application search engine server 100b and be transmitted to the third module 406 when the app 1 is being analyzed.

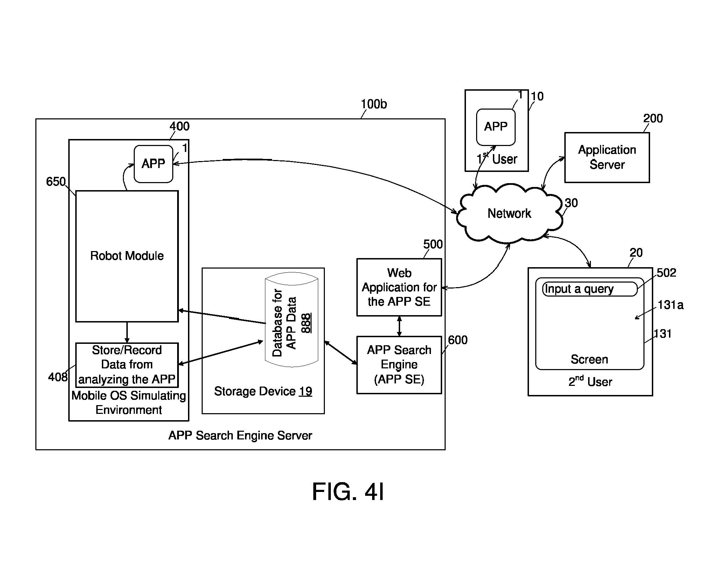

In another example, the script 405, the third module 406, the second module 404 and the first module 402 can be integrated to form one robot module 650, as exemplified in FIG. 4I. The robot module 650 is configured to simulate human behaviors so that it can execute an app just like how an actual human would. In still another example, the robot module 650 can also learn/record how to operate an app by monitoring and recording the commands of human users of the app. For example, the robot module 650 may be tasked to monitor user input histories in order to learn/record behavior patterns relating to the app. In other example, the robot module 650 may be configured to analyze graphic user interfaces (GUIs) of an app using an image recognition algorithm.

In other example, the image recognition algorithm may include an optical character recognition (OCR) algorithm. When using the OCR algorithm to analyze the app's GUIs, buttons, characters, lines, pages and windows on the GUI can be recognized, and specific action can be performed by the robot module accordingly.

In other example, the robot module may utilize a random probing algorithm to analyze GUIs. The random probing algorithm directs the robot module to randomly probe or activate an app's GUIs, for example probing or activating pixels on the GUI screen in a random fashion. If a particular pixel or pixel location of the GUI generates application data based on this random probing algorithm, such analysis can be learned and recorded by the robot module, for example, in a machine learning manner.

The virtual machine 400 can further include a fourth module (or program) 408 configured to store application data in the database 888 or the storage device 19 (or any other storage device(s) coupled with the application search engine server 100b).

Another embodiment of the invention can be described as follows. The app 1 is executed on a virtual machine 400 by a second module 404. The third module 406 in the virtual machine 400 performs an analysis on the app 1. Subsequently, a script 450 is executed to generate an activity on the app 1. The activity involves requesting application data from the application server 200. The application server 200 delivers the requested application data to the app 1. The delivered data is collected and stored in the database 888. Alternatively, the app 1 may generate application data by itself. Any application data generated by the application is also collected and stored in the database 888. Therefore, application data collected and stored by the application search engine can be data transmitted from application server 200 as well as data generated by the app 1 itself. A remote user 20 inputs a query in a field 502 and presses a search button 522 on a user interface 131a to generate a search request for data relevant to the keyword. An application search engine 600, after receiving the search request, searches for application data in the database 888 that is relevant to the query. If relevant data is found, the application search engine 600 generates a search result that includes either such data, list of relevant apps, one or more links to the one or more relevant apps associated with such data, or one or more download links for the one or more application packages of the one or more relevant apps. Subsequently, the web application 500 transmits the search result to the remote user 20.

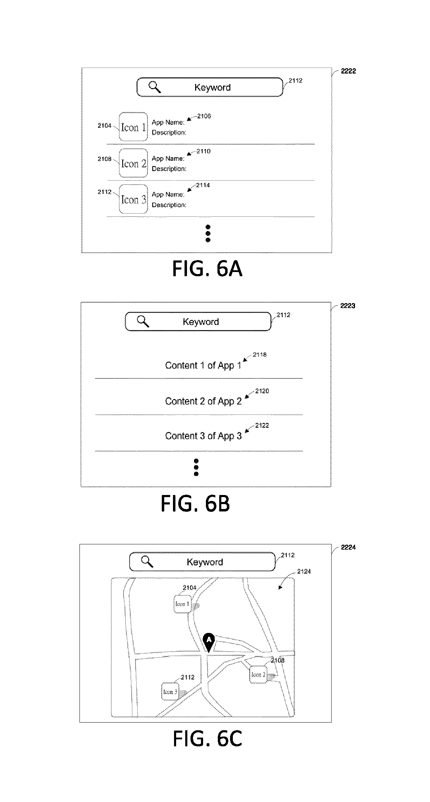

FIGS. 6A-6C illustrate some exemplary search results. Where more than one relevant application data is found by the application search engine 600, the links to the application data, the download links to the apps that contain such application data or the application data itself can be shown and ranked according to the number of downloads, likes or check-ins for each app. In one example, the number of downloads, likes or check-ins for each app can be stored in the database 888 (referring to FIG. 3A or 3B), and the application data from the application server can also be stored in the storage device 19 for the application search engine 600 to search.

FIG. 4B illustrates another network embodiment according to an example of the present invention. The network in FIG. 4B is similar to the one in FIG. 4A, except that, the virtual machine 400 is configured in a mobile OS simulating server 100e, which is separated from the application search engine 600 that is now configured in the application search engine server 100b. In another example, by using a plurality of servers configured as a single mobile OS simulating server 100e (hereinafter the "plurality of mobile OS simulating servers"), one can achieve better performance when executing multiple apps or processing a large amount of application data from multiple application servers.

In still another example, the web application 500 can be configured inside the web application server 100a. The web application 500 is separated from the application search engine 600 which is configured inside the application search engine server 100b. In order to effectively service a large amount of users, a plurality of servers is configured as a single web application server 100a (hereinafter the "plurality of web application servers") or as a single application search engine server 100b (hereinafter the "plurality of application search engine servers"). A load balance server (or a plurality of load balance servers) can be applied before the plurality of web application servers or the plurality of application search engine servers to better handle user's search requests. To achieve more efficient storage volume and quicker response time for accessing/searching a storage device(s) or database(s), the storage device 19 of the application search engine server 100b in FIG. 4A can be replaced with a storage device 19x disposed outside the application search engine server 100b (but still coupled with the application search engine server 100b). In one example, the storage device 19x can have larger capacity than the embedded storage device 19 of the application search engine server 100b in FIG. 4A. In another example, a plurality of storage devices (e.g., an array of storage devices), each of which is configured as the storage device 19x, can provide more capacity for the mobile OS simulating server 100e or the application search engine search server 100b. In other example, the storage device 19x can also be configured in the file management server 100d.

Similarly, the database 888 in FIG. 4A can be replaced with the database 888' in FIG. 4B. The database 888'can couple with a database management server or a storage device 19x. In other example, a plurality of database configured as the database 888' can be used as a single database 888' for quicker response time.

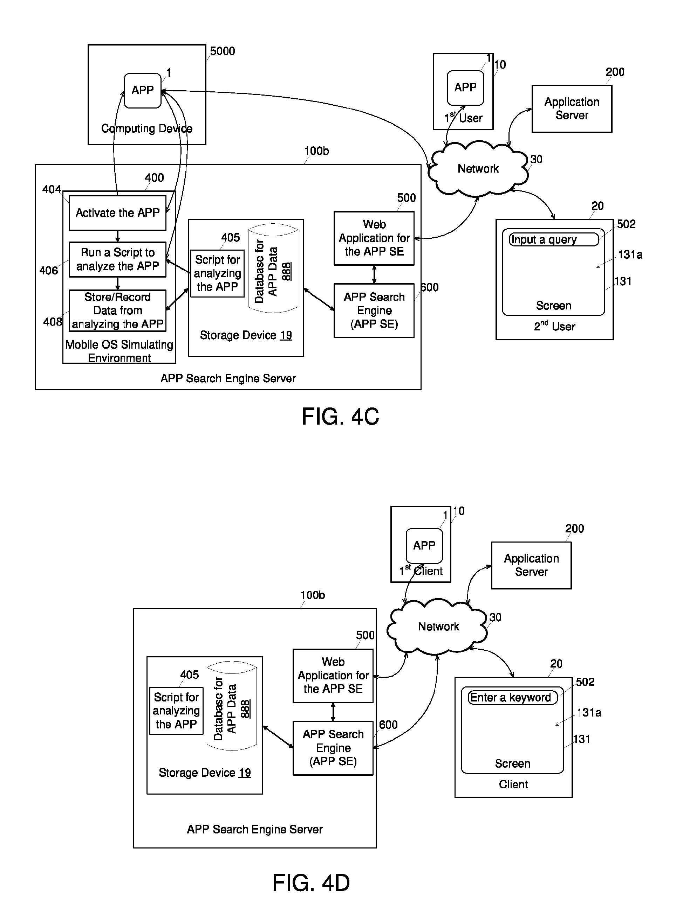

FIG. 4C illustrates another network embodiment according to an example of the present invention. The application package can be executed on a computing device 5000 with a mobile OS environment. Alternatively, the computing device 5000 can include a computer operating system environment to host applications such as web apps, extensions and plug-ins. In one example, either the app 1 can request application data from the application server 200 or generate the data by itself when it run by first user 10. The resulting application data is collected by the application search engine server 100b. The application data collected can be stored in the storage device coupling to the application search engine server 100b. In one example, the computing device 5000 can be a smart-phone 10a, a tablet 10b, a laptop 10c or a personal computer 10d.

In another example, the application search engine server 100b can further include a virtual machine 400 which comprises the module/program 404 to execute the app 1 on the computing device 5000. In another example, the virtual machine 400 can also include a module 406 that runs a script 405 to execute the app 1 on the computing device 5000. The script 405 can be stored in the storage device or embedded in the module 406. The module 406 can also be configured to store the application data in the storage device 19 or other storage device coupled to the application search engine server 100b

FIG. 4D illustrates another network embodiment according to an example of the present invention. The application data can be transmitted from the application server 200 or the first user 10 directly to the application search engine server 100b, and the application search engine server 100b will store the data in the storage device 19 or other storage device. In another example, the application server 200 can transmit application data directly to a storage device and the application data will be stored in such a storage device. The application search engine server 100b can search the storage device for data that is relevant to any query.

The embodiment illustrated by FIG. 4D does not require executing an app to obtain application data from the application server. For example, a program can be implemented, configured in or coupled with the application server 200 to transfer or provide the application data it possesses to be stored into a storage device of the present invention. The program can be a script or any software codes that can communicate with the application server 200. The application data in the application server 200 can be transferred. Once a user query is received, the application search engine server 100b can search the storage device for data that is relevant to the query. One skilled in the art understands that the present invention is not limited to the examples disclosed herein. There are other ways to collect data in the application server 200 without the need to execute the app and they should all fall under the scope of the present invention. For example, a program can be implemented in the app search engine server 100b for the purpose of accessing and/or obtaining application data from the application server 200. Here, the program only needs to know a URL/URI corresponding to the application server 200 in order to crawl application data in the application server 200. In another example, the server (e.g., the app search engine server 100b) can execute a script to analyze the app 1 to determine which and where is the corresponding application server 200 in order to access and/or obtain the application data.

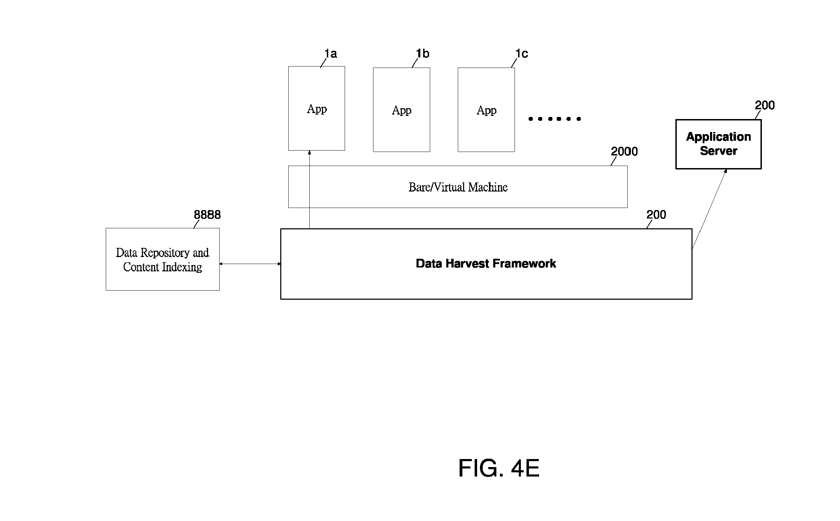

In the embodiment above, a data harvest module or framework 3000 (see FIG. 4E) can also be implemented in the application search engine server 100b to analyze and process application data that are being transmitted directly from the application server 200. Such data harvest framework can simulate the functions of an app in order to process and understand the application data provided by the application server 200. For example, if application data transmitted by the application server 200 is in discrete packets, the data harvest framework may collect the data packets and process them into meaningful application data capable of being searched. In addition, the data harvest framework can also analyze application data to identify desired application data, exclude undesired application data, and categorize application data or a combination thereof.

The program/module(s) described herein can be executed in a processor of the abovementioned server(s) (e.g., the processor 18 of the application search engine server 100b). The temporary data of the program/module(s) can also be stored in a cache of the processor or memory of the server(s) (e.g., the memory 12 of the application search engine server 100b). However, one skilled in the art understands that the present program/module(s) can also be implemented in hardware (e.g., a hardware module), such as a chip or a circuit.

### Crawler/Spidering

In one example, a web crawler (or a web spider) can be used to collect application packages, application data, data/information (e.g., descriptions) related to apps or application links. The application search engine server 100b or OS simulating server 100e can download the apps collected by the web crawler and execute them on the server cluster 100.

### Information Retrieval

Information retrieval can be applied to application data provided by the application server or by the app itself in response to requests. The purpose is to organize and index data into meaningful categories in order to achieve search efficiency.

### App Browser

An app can be executed on remote servers or cloud, and application data from the application server may be streamed to the client and shown on an App browser. A user may operate the apps via the App browser without the need to install the apps locally.

### An Exemplary Application

FIGS. 5A to 5E illustrate exemplary user interfaces of an app according to an example of the present invention. In FIG. 5A, the app has a welcoming screen (or activating page) 988 which usually includes a picture. The welcoming screen 988 can be shown after the application is activated or opened.

Referring to FIGS. 5B-5E, the user interface can include the container 900 of which content(s) shown on the container 900 can be changed depending on which tab is selected (the tabs can be shown at the bottom part of the container 900 as tabs 918, 920, 922 and 924). For example, FIG. 5B shows a layout of the container 900 when the tab 918 (i.e., the tab named "Item") is selected. The layout can include an action bar or banner 926 (which can further include a link for a user to login to the app), a background or advertisement 910 (e.g., a video, an animation, a sliding background of a flash). Items 90-1 to 90-5 can include optional images 90-1p to 90-5p. In one example, the items 90-1 to 90-5 couple to a web application server to fetch dynamic, real-time application data from the application server by http methods (e.g., "POST" or "GET" method such as "POST http://example.com/apiPurpose.php" or "GET http://example.com/apiPurpose.php?mode=GetData&ID=C00001"). Here, when the app requests application data from the application server, the application server can transmit a response in JavaScript Object Notation (JSON) structure or extensible Markup Language (XML) structure (e.g., {"status":"OK", "result" : {"name" : "Happy Cafe", "display" : "1", "addr" : "3F., No.18-6, Jinhua St., Taipei, Taiwan, R.O.C", "desc" : "This is the Introduction of Happy Cafe", "shophours" : "0800-2200", "openweek" : "0111110", "shoptel" : "886-33433997", "shopurl" : "http://anotherexample.com", "shopimage" : [{"http://example.com/images/90-1p.jpg"}]}}). In an example of the present invention, the application data fetched from the application server may include a link to one view of an application, a link to the application data, a downloadable link to an application package of the application, a text relating to the application or application data, an image relating to the application or application data, a video relating to the application or application data, and an audio relating to the application or application data.

### Exemplary User Interfaces Provided by Application Search Engines

FIGS. 6A to 6C illustrate another exemplary user interfaces provided by the web application server 100a or the application search engine server 100b to a user (e.g., the second user 20) according to an example of the present invention. The user interfaces shown in FIGS. 6A to 6C can be on a screen of a device such as a computer, a laptop, a tablet/pad, a smartphone or other mobile devices. Referring in FIG. 6A, apps relevant to the keyword can be shown with corresponding application icons 2104, 2108 or 2112 and application names or descriptions 2106, 2110 or 2114 as search results. Referring to FIG. 6B, the search results can be displayed as a list of app contents 2118, 2120 or 2122 or as links to those contents. Referring to FIG. 6C, the search results can also be displayed on a map 2124. The application icons 2104, 2108 and 2112, as search results, can be shown on the map 2124.

### Web Apps, Extensions and Plug-ins

Since web apps, extensions and plug-ins (applications) operate in a similar way to apps, the present invention also discloses a method of searching applications. Note that web apps, extensions, and plug-ins may be executed either on a smart device or on a computing device (e.g., a PC). When running applications on a personal computer, users of these applications communicate with designated application servers while carrying out their tasks. For example, when using "The Weather Channel" extension for Chrome browser, the extension obtains user's location (or the user can input his/her location). Subsequently, application server, in conjunction with "The Weather Channel" extension, will deliver the weather forecast for the user's location or the user's choice of location to the user's browser on the computer. The mechanism here is very similar to how users of apps request data from the application server.

### Scheduler

A scheduler may be further utilized in the system of the present invention. The main function of a scheduler is to determine and arrange the manners in which apps are executed. A scheduler may be a script, code or program that can be implemented in any of the servers or databases of the present invention. A scheduler can also be configured to schedule servers, virtual machines or robot modules to execute apps based on a scheduling policy.

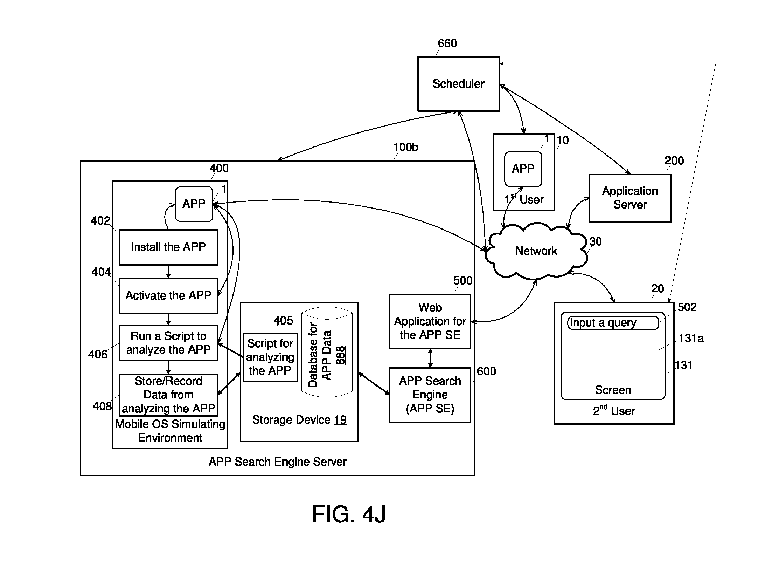

In one embodiment, one or more schedulers may be configured to schedule virtual machines or servers to execute apps. In another embodiment, the schedulers may be configured to schedule robot modules to execute apps. The scheduler is implemented with the goal to improve the overall performance of the system of the present invention by efficiently allocating and utilizing system resources. For example, in FIG. 4J, a scheduler 660 may be utilized to coordinate the server (e.g., the application search engine server 100b), the electronic device of the first user 10, the network 30, the application server 200, and the electronic device for the second user 20, in order to facilitate execution of the apps. For example, the scheduler 660 may coordinate according to the requirements of the system components, such as the amount of resource needed, number of tasks running, waiting time, priorities, data dependency, and etc. The scheduler 660 may also be disposed inside the server (e.g., in the application search engine server 100b) according to an example of the present invention.

The scheduler may schedule the various components of the systems based on a scheduling policy. A scheduling policy defines the manners in which apps are executed. For example, the policy can establish rules that govern the order in which the apps are executed by robots, virtual machines or servers. The scheduling policy can also define the execution frequency of apps such that the system knows how many times an app should be executed and the interval between each execution. The scheduling policy can also administer the time, frequency, priority and length of execution and/or any combination thereof. The scheduling policy can be saved in a database (e.g., the database 888 or 888').

In one example, the scheduler may increase the execution frequency of an app if the loading of the robot, virtual machine or server handling the app is light. Conversely, a scheduling policy may direct the scheduler to decrease the execution frequency if the loading of the robot, virtual machine or server handling the app is heavy.

The order and priority in which apps are executed can also be defined by the scheduling policy. For example, the scheduling policy can include algorithms such as the first-come-first-serve scheduling algorithm, the shortest-job-first scheduling algorithm, the priority scheduling algorithm, the round-robin scheduling algorithm, the multilevel queue scheduling algorithm, the multilevel feedback queue scheduling algorithm, and/or the real-time scheduling algorithm. Understanding system conditions and resources, as well as ascertaining the categories and characteristics of the apps may help determine which scheduling algorithms to apply. For example, the scheduling policy may dynamically assign a status to each app that would determine the priority in which the apps are to be executed. In particular, an idle time or an elapsed time (after the app was first executed) may be recorded for each app such that the scheduler may dynamically switch the execution order of the apps depending on the status of the apps.

The scheduling policy can be generated by an artificial intelligence (AI) approach or a manual approach. In an AI approach, the scheduler may possess a higher-level intelligence to learn the characteristics of the apps, where the characteristics of the apps may include the execution frequencies or the types (i.e. categories) of the apps, etc. Learning the type or category of an app may help the scheduler to determine the execution frequency of such app. For example, a news app may require a higher execution frequency than a game app because a news app typically updates its content more often than a game app. Therefore, if a news app is encountered, the scheduler may dynamically raise the priority or frequency of its execution, either by a robot, virtual machine or server. Conversely, the scheduler may also dynamically lower the priority or frequency of an app's execution if an app that rarely updates its content is encountered.

Under a manual approach, the scheduling policy is defined by manually input the policy. For example, the administrator of the present system may manually command the desired execution order, priority or frequency in which the apps are executed.

### App Security Checking Module

Mobile software security has become a major issue today with both developers and users alike. With a vast number of apps in the market place, a solid security check measure must be put in place to ensure that the apps found by crawlers are secure and contain no malicious virus.

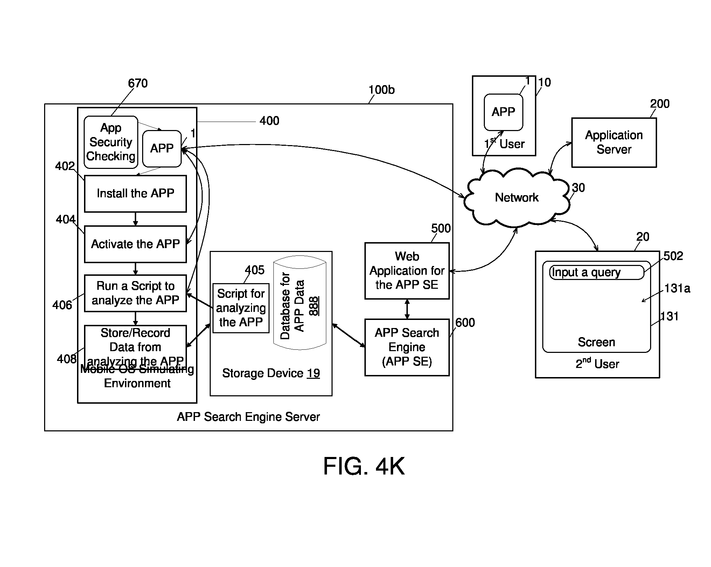

In one embodiment, as exemplified in FIG. 4K, an app security checking module 670 may be configured to check securities of software applications or apps based on a plurality of security levels. More specifically, a plurality of different security levels may be defined for different application processing requirements, and may be utilized for blocking apps not qualified for specific security level. Note that the app security checking module 670 may be disposed outside the virtual machine 400 but still in the server (e.g., in the application search engine server 100b), in an example of the present invention.

In another embodiment, the app security check module 670 is configured to provide security certification for apps. Apps found by crawler are checked by the security check module 670 to determine if they can pass any one of five security levels, including, for example, level-1, level-2, level-3, level-4, and level-5.

The app security check module 670 can include a set of security certification mechanisms for each of the security levels. The security certification mechanisms can include communication certification, malware detection through manifest and API calls tracing, and malicious system behaviors detection.

### Mechanisms for Single/Multiple Virtual Machine

In the abovementioned diagrams (e.g. FIGS. 4A-4K), a single virtual machine with a scheduler is used to execute apps. In other embodiments, multiple virtual machines may be utilized to simultaneously execute multiple apps on one server. Accordingly, application data of multiple apps may be simultaneously generated, processed, and/or stored in the server of the present invention. For a user using the system of the present invention, the application data of multiple apps may be simultaneously shown or displayed on a user interface supported by the server using multiple virtual machines.

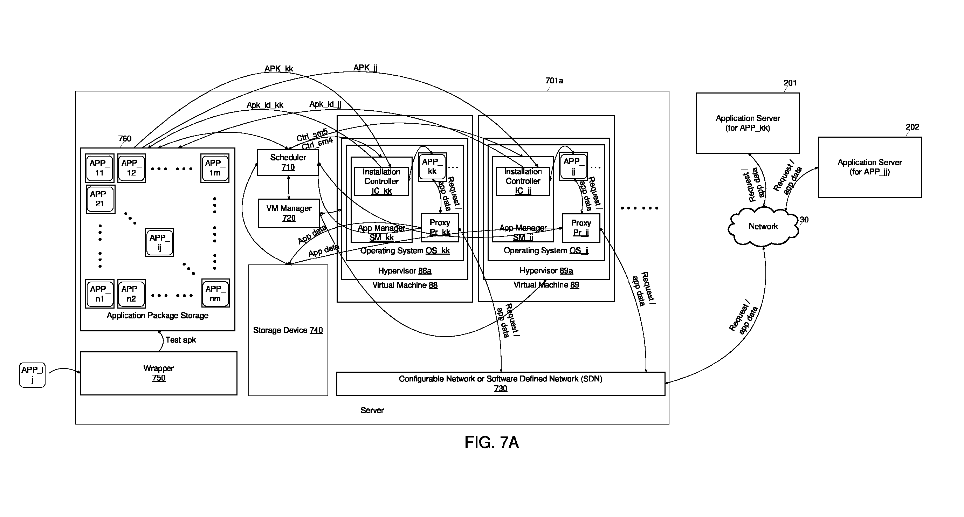

FIGS. 7A-7H illustrate embodiments of the present invention utilizing a single virtual machine or multiple virtual machines for executing apps.

In FIG. 7A, an exemplary system 700 can include a server 701a and one or more application servers 201 and 202, and the servers 701a and 201/202 can couple/communicate with each other via a network 30. The application servers 201 and 202 may have similar functionalities as those of the application server 200. The application servers 201 and 202 are respectively assigned (by corresponding app developer(s)) to process application data of different apps or of different threads of a same app, for example, the application server 201 may be specifically assigned to process application data related to an app "APP_kk" by the app developer of the app APP_kk, and the application server 202 may be specifically assigned to process application data related to an app "APP_jj" by the app developer of the app APP_jj. The network 30 acts as a medium between the server 701a and the application servers 201 and 202 for data transmission.

The server 701a may be designed based on the server 100b shown in FIGS. 4A-4K, but may also have additional functionalities. The server 701a may have a scheduler 710, a virtual machine manager (VM manager) 720, a storage device 740, a wrapper 750, an application package storage module 760, and one or more virtual machines 88 and 89. The server 701a may also optionally include a configurable software defined network (SDN) 730.

The VM manager 720 is configured to manage virtual machines 88 and 89 under the instruction of scheduler 710 (e.g., an instruction "Ctrl_sm5" for controlling the virtual machine 89 or an instruction "Ctrl_sm4" for controlling the virtual machine 88). VM manager 720 may manage the generation, deletion, activation, and/or deactivation of virtual machines in the server 701a. For example, when there is an app to be activated on the server 701a, the scheduler 710 instructs the VM manager 720 to create a new virtual machine in the server 701a to execute the app. In another example, when there is an app to be deactivated on the server 701a, the scheduler 710 instructs the VM manager 720 to delete a virtual machine previously assigned to the app from the server 701a. Note that VM manager 720 may be operated based on a scheduling policy of the scheduler 710.

Note that in some embodiments the VM manager 720 may be implemented as part of the robot module previously mentioned (e.g., as part of the robot module 650 in FIG. 4I).

Note that scheduler 710 may be implemented as program codes or scripts stored inside the server 701a in some embodiments of the present invention.

In one example, the wrapper 750 is configured to provide a plurality of input events and/or instructions for operating an app such that the app can be directly executed on the server 701a. Input events may include a gesture event, such as a touch, move or shake event for the purpose of operating the app.

In another example, the wrapper 750 is configured to wrap an app with a runner application programming interface (API) so that the app is executable on the server 701a with the aid of the runner API. The app may not be executable before being wrapped with the runner API since the app may use a specific format/language that one or more operating systems utilized by the server 701a cannot parse (e.g., an ipa file executable in an iOS environment is not installable and/or executable in an Android environment before being wrapped with the runner API to translate/convert the I/O of its corresponding iOS app into an Android acceptable format(s)). With the aid of the runner API, the app will be executable in the operating systems utilized by the server 701a. Note that the apps to be wrapped by the wrapper 750 may come from the abovementioned crawler in some examples.

The application package storage module 760 is configured to store apps for the server 701a, for example, to store apps APP_11, APP_12, ..., APP_1m, APP_21, ..., APP_ij, ..., APP_n1, APP_n2, ..., and APP_nm.

The storage device 740 is configured to store application data generated by executing one or more apps on the server 701a.

Assuming that the virtual machine 88 is generated by the VM manager 720 to specifically execute app APP_kk, the virtual machine 88 may also include a hypervisor 88a, which is configured to dynamically manage the resources of virtual machine 88. For example, the hypervisor 88a may request resources required by the virtual machine 88 from the server 701a, or may release resources acquired by the virtual machine 88 back to the server 701a. The hypervisor 88a may include an operating system OS_kk. The operating system OS_kk may include at least an app manager SM_kk and a proxy Pr_kk. The app manager SM_kk may include an installation controller IC_kk for installing the app APP_kk from the application package storage 760 using an identity Apk_id_kk of the app APP_kk. The proxy Pr_kk is configured to route or receive application data of the app APP_kk. It is noted that the proxies in the server 701a may act as the data gathering proxy 710 mentioned above.

Similarly, the virtual machine 89 is generated by the VM manager 720 to specifically execute the app APP_jj. The virtual machine 89 may include a hypervisor 89a, which is configured to dynamically manage resources of the virtual machine 89. For example, the hypervisor 89a may request resources required by the virtual machine 89 from the server 701a, or may release resources acquired by the virtual machine 89 back to the server 701a. The hypervisor 89a may include an operating system OS_jj. The operating system OS_jj may include at least an app manager SM_jj and a proxy Pr_jj. The app manager SM_jj may include an installation controller IC_jj for installing the app APP_jj from the application package storage 760.

The proxy Pr_jj is configured to route or receive application data of the app APP_jj.

In some examples, the operating systems of the server 701a may be operating systems for mobile electronic devices, such as iOS, Android, Android-x86, and etc.

In some examples, the hypervisors 88a and 89a may be kernel-based virtual machines (KVM).

In some examples, the virtual machines 88 and 89 may run a Linux-based operating system, for example, CentOS (e.g., CentOS 6.4) or Ubunto.

In some embodiments of the present invention, the SDN 730 is configured to manage transmission and/or reception of application data between the virtual machines (e.g. the virtual machines 88 and 89) and their corresponding application servers (e.g. the application servers 201 and 202). The configurable SDN 730 stores addresses (such as IP addresses) of the virtual machines provided by the server 701a. When application server (e.g. the application server 201) requests application data of an app (e.g. the app APP_kk), the configurable SDN 730 routes the application data from a virtual machine executing the app (e.g. the virtual machine 88) to the corresponding server according to the stored addresses. When the server 701a is utilized to simultaneously host a large amount of virtual machines, the configurable SDN 730 will help the server 701a to efficiently manage application data traffic between the virtual machines and their corresponding servers.

In some examples, the configurable SDN 730 may be implemented by Open vSwitch.

An exemplary operation flow of the server 701a is explained as follows. When the server 701a prepares to execute the app APP_kk is, the scheduler 710 instructs the VM manager 720 to generate virtual machine 88. The installation controller IC_kk installs the app APP_kk from the application package storage module 760 in the virtual machine 88. The app manager SM_kk can then execute the app APP_kk to generate application data. The proxy Pr_kk may store the application data to the storage device 740, direct the application data to the application server 201 via the network 30 (may also via the aid of the configurable SDN 730 in some embodiments of the present invention), or receive a request from the server 201. As a result, the virtual machine 88 is capable of generating application data in response to a request from the application server 201 and returning application data back to the application server 201. Upon execution of the app APP_kk in the virtual machine 88, the hypervisor 88a dynamically manages the resources of the virtual machine 88.

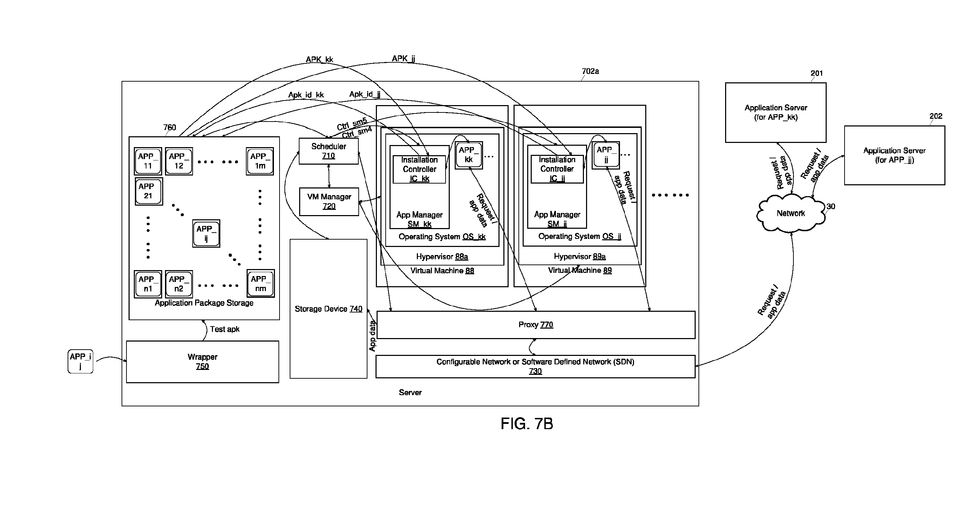

In FIG. 7B, a server 702a is implemented in similar fashion as the server 701a, except that the proxies of the virtual machines (e.g. the proxies Pr_kk and Pr_jj) are removed, and an integrated proxy 770 is utilized to service the virtual machines.

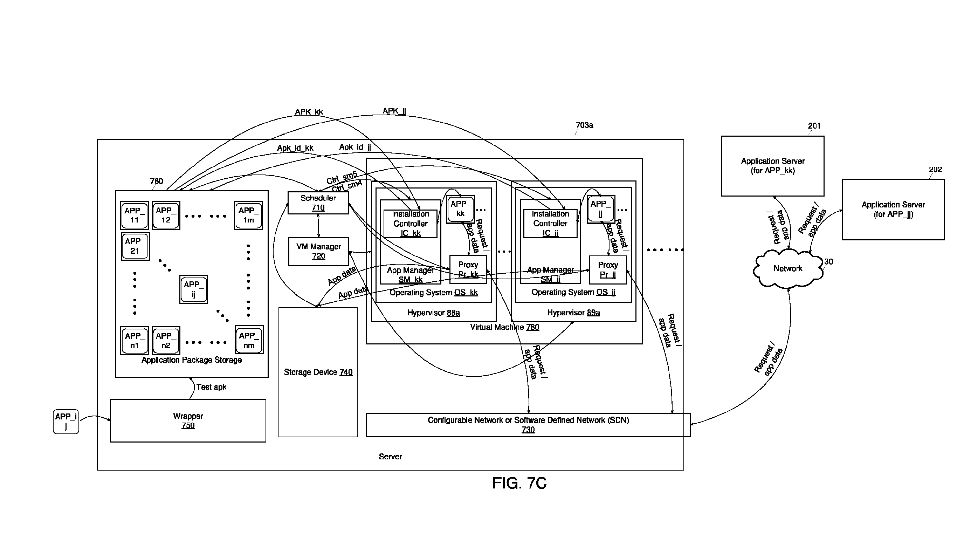

In FIG. 7C, a server 703a is implemented in similar fashion as the server 701a, except that the virtual machines (e.g., the virtual machines 88 and 89) are integrated into a single virtual machine 780. Note that a single virtual machine (e.g. the virtual machine 780) is configured to manage multiple hypervisors (e.g. the hypervisors 88a and 89a) in the server 703a so that the virtual machine 780 is capable of simultaneously executing one or more apps.

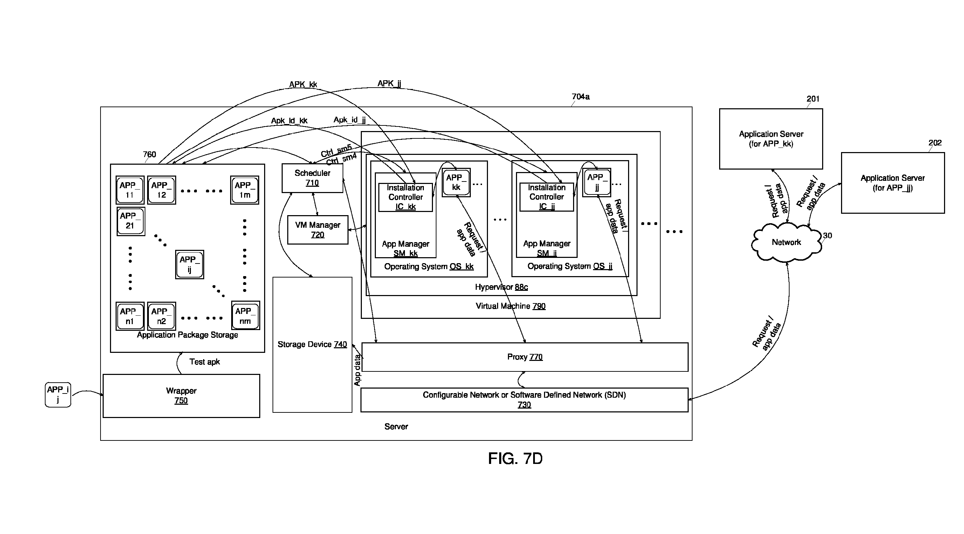

In FIG. 7D, a server 704a is implemented in similar fashion as the server 702a, except that the virtual machines (e.g., the virtual machines 88 and 89) are integrated into a virtual machine 790, and the hypervisors of the virtual machines (e.g., the hypervisors 88a and 89a) are also integrated into a single hypervisor 88c. Note that the hypervisor (e.g., the hypervisor 88c) is configured to simultaneously manage one or more operating systems (e.g., the operating systems OS_kk and OS_jj) in the server 704a.

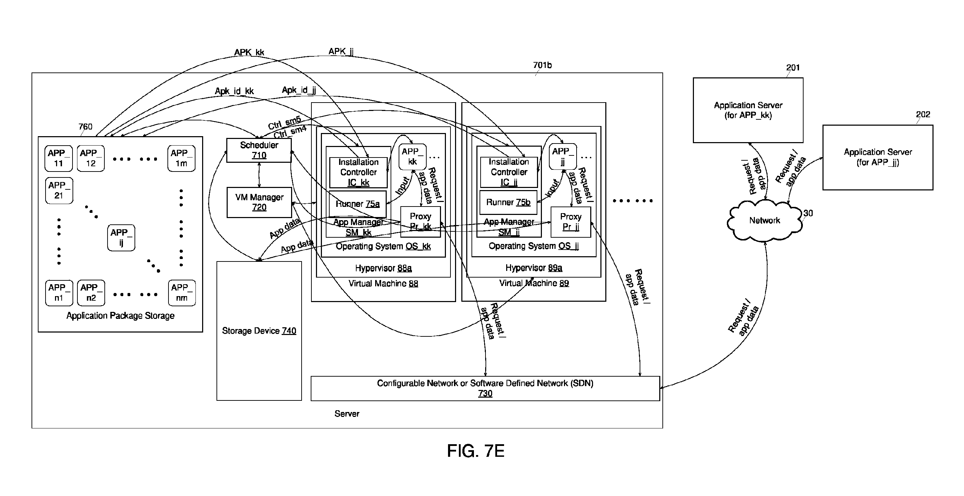

In FIG. 7E, a server 701b is implemented in similar fashion as the server 701a, except that the wrapper 750 is relocated to the app manager, for example, as runners 75a and 75b. The runner 75a is configured to wrap the app APP_kk with a runner API so that the app APP_kk is executable in the operating system OS_kk. The runner 75b is configured to wrap the app APP_jj with a runner API so that the operating system OS_jj can execute the app APP_jj.

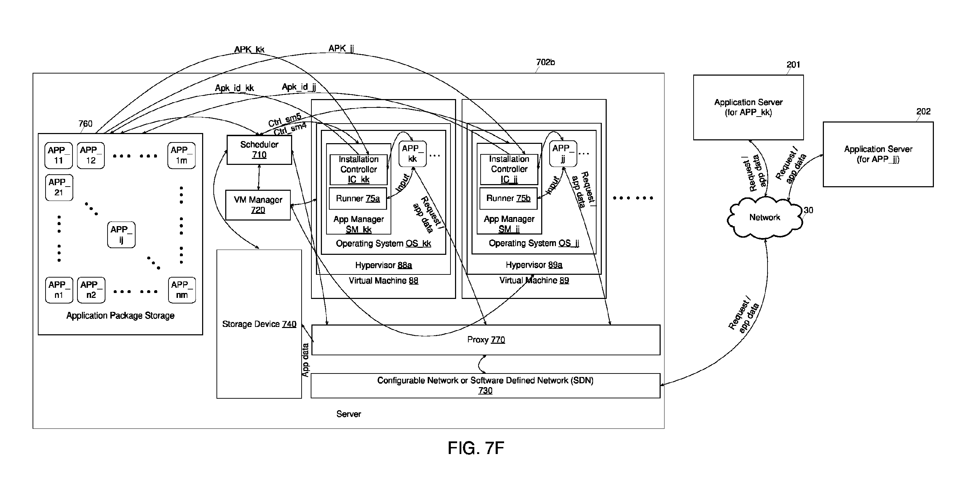

In FIG. 7F, a server 702b is implemented in similar fashion as the server 702a, except that the wrapper 750 is relocated to the app manager, for example, as runners 75a and 75b.

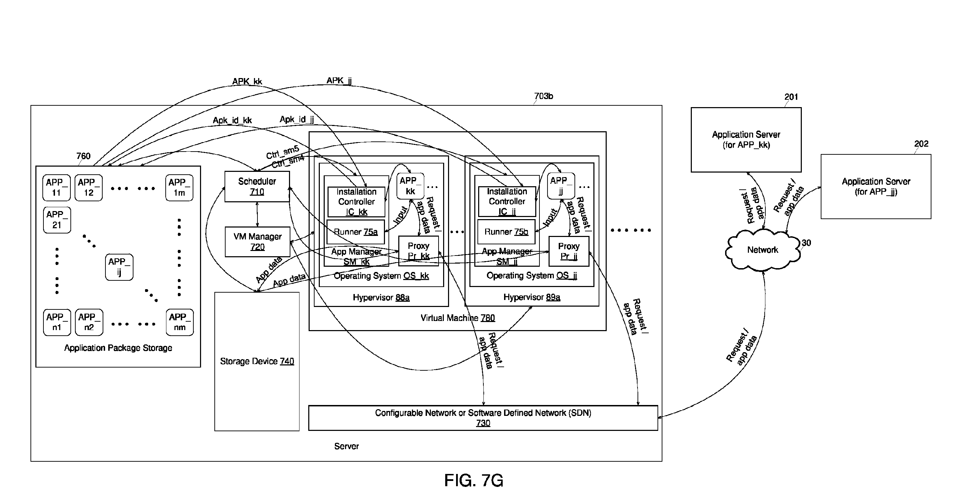

In FIG. 7G, a server 703b is implemented in similar fashion as the server 703a, except that the wrapper 750 is relocated to the app manager, for example, as runners 75a and 75b.

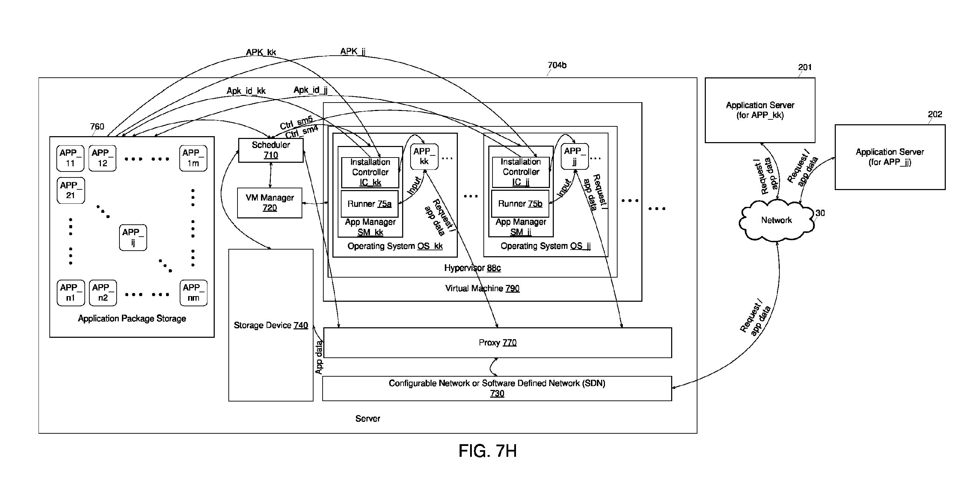

In FIG. 7H, a server 704b is implemented in similar fashion as the server 704a, except that the wrapper 750 is relocated to the app manager, for example, as runners 75a and 75b.

Note that changing the number of virtual machines shown in FIGS. 7A-7H should also be in the scope of the present invention.

Note that reasonable combination and/or relocation of elements shown in FIGS. 7A-7H should also be in the scope of the present invention.

### Data Harvest Module

In some embodiments, the data harvest framework 3000 shown in FIG. 4E may also be implemented inside the VM managers shown in FIGS. 7A-7H (e.g., the VM managers SM_kk and SM_jj) for analyzing and processing application data. VM manager can be implemented as part of the robot module described previously (for example as part of the robot module 650 in FIG. 4I). The data harvest module 3000 may act as a hook to intercept API calls (i.e., system calls) related to apps that have been wrapped with runner APIs, and may record and analyze behaviors of apps in a machine learning manner (or fetching application data/content from the system call(s)).

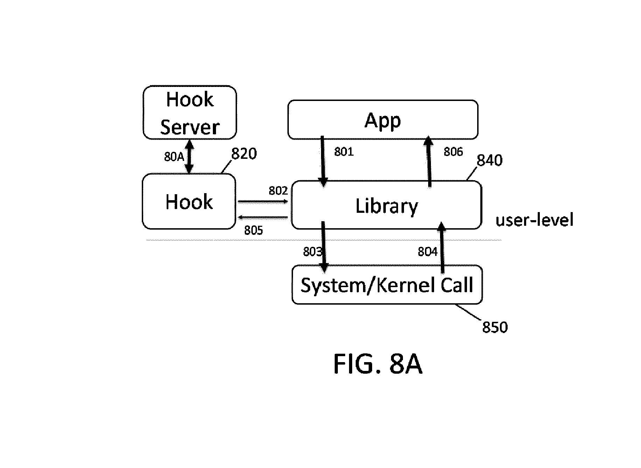

FIG. 8A illustrates an OS-concept diagram of the data harvest module 3000 for hooking application data on the user-level according to an example of the present invention. Referring to FIG. 8A, a hook server 810 is coupled with or disposed in the server 100b or 100e and is configured to receive the hooked application data and transfer it to either the data repository, the storage device or other preprocessing means. A hook program 820 is configured to either fetch/intercept, record or analyze the application data when or after it is received by a library 840 via a system/kernel call 850 that calls the library 840.

An exemplary interaction that occurred during the execution of the app 830 can be described with reference to FIG. 8A in following paragraphs:
Stage 80A: The hook server 810 receives the fetched/intercepted application data from the hook program 820.
Stage 801: The app 830 calls the library 840 to generate a request for the application data from its remote application server 200.
Stage 802: The hook program 820 hooks the library 840 (e.g., calls a hook API to hook the application data received by the library 840) to receive the application data generated after the system call 850 calls the library 840 (as done in Stage 804).
Stage 803: After the library 840 is called by the app 830, a request (e.g., an HTTP POST or GET method) is generated to the system call 850. The system call 850 can transmit the HTTP POST or GET request to a corresponding driver(s), for example to a network interface card (NIC) driver. The NIC driver will convert/transform/encode/embed the HTTP POST or GET request to form a packet(s) and have it transmitted to the remote application server related to the app 830 (e.g., application server 200) via the Internet by a MAC sublayer (i.e. the media access control sublayer of the data link layer of the OSI model) and/or a PHY layer (i.e. the physical layer of the OSI model).
Stage 804:The system call 850 transfers the application data it receives from the driver(s) to the library 840.
Stage 805: The application data received by the library 840 from the system call 850 is intercepted or fetched by the hook program 820 in this stage.
Stage 806: A result in response to the request in stage 803 is generated after receiving the application data and calling the library 840 from the system call 850. For example, if the original request is a request for content, then after the content (e.g., an article with a plurality of texts) is received by the system call 850, it calls the library 840 to show the content on a UI (i.e. user interface) of the app 830 (e.g., a class for displaying a folded view/window on the UI of the app 830 may be used to display/demonstrate the content).

In one example, the request may carry keywords, the application data may carry search results corresponding to such keywords, and the hook program 820 may be applied to receive the search results. The search results may be stored in a storage device (e.g., the storage device 740 or the data depository 8888) after a series of processing started from the hook server 810.

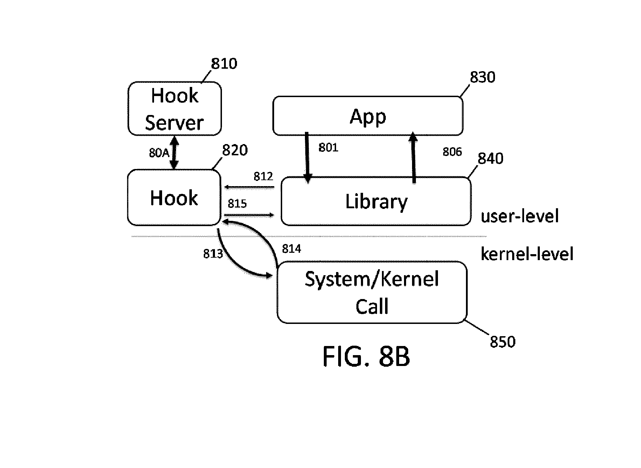

FIG. 8B illustrates an OS-concept diagram of the data harvest module 3000 for hooking application data on the kernel-level according to an example of the present invention. Referring to FIG. 8B, the functionalities of the elements shown in FIG. 8B are similar to those of FIG. 8A so they will not be repeated here.

An exemplary interaction that occurred during the execution of apps 830 shown in FIG. 8B are described in the following paragraphs:
Stage 80A:Same as those described with reference to FIG. 8A.
Stage 801: Same as those described with reference to FIG. 8A.
Stage 812: After the library 840 is called by the app 830, a request is generated and intercepted by the hook program 820.
Stage 813: The hook program 820 sends the request to the system/kernel call 850. Similarly, the system/kernel call 850 transmits the request (e.g., a HTTP POST or GET method) to the corresponding driver(s) and the driver(s) convert/transform/encode/embed the request to form a packet(s) and have it transmitted to the application server related to the app 830 (e.g., the application server 200) via the Internet by the MAC or PHY.
Stage 814: The system/kernel call 850 transfers the received application data to the hook program 820.
Stage 815: The hook program 820 transfers the application data to the library 840.
Stage 806: Same as those described with reference to FIG. 8A.

In some embodiments, part of the tasks of the data harvest module 3000 can be transferred to the proxies shown in FIGS. 7A-7H to relieve the loading of the VM managers shown in FIGS. 7A-7H.

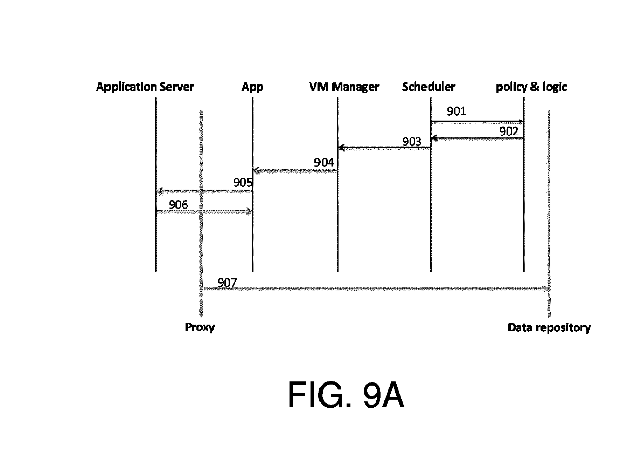

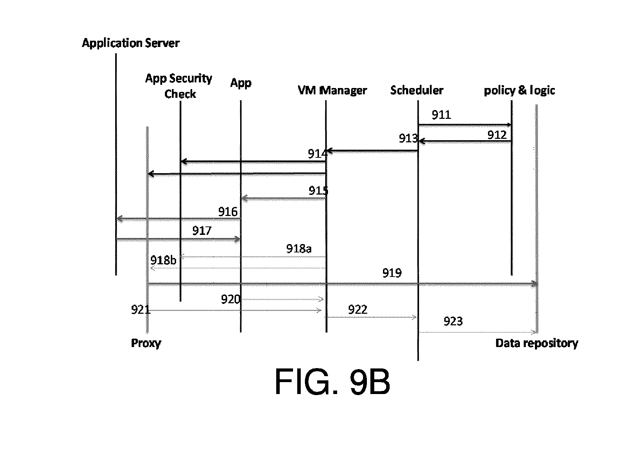

FIGS. 9A and 9B illustrate the examples of using the proxies shown in FIGS. 7A-7H to perform task(s) of the data harvest module 3000 for the purpose of gathering application data.

In FIG. 9A and FIG. 9B, the "policy & logic" indicates the scheduling policy of a scheduler, for example, the scheduler 710.

Stages of FIG. 9A are described as follows:
Stage 901: The scheduler requests a scheduling policy related to an app.
Stage 902: The request is responded with an acknowledgement.
Stage 903: The scheduler activates a VM manager corresponding to the app.
Stage 904: Under the control of the scheduler, the VM manager either activates or deactivates the app or operates the app.
Stage 905: The app sends a request to its corresponding application server.
Stage 906: The application server returns a response carrying data or contents related to the request.
Stage 907: A proxy corresponding to the app fetches/intercepts and stores the data or contents in response to a storage device or a data repository.

Stages of FIG. 9B are described as follows to include app security checking mechanism:
Stage 911: The scheduler requests a scheduling policy related to an app.
Stage 912: The request is responded with an acknowledgement.
Stage 913: The scheduler activates a VM manager corresponding to the app.
Stage 914a: The VM manager calls an app security checking module to monitor the security level of the app.
Stage 914b: The VM manager calls a proxy to fetch/intercept transmitted data relating to the app for future analysis.
Stage 915: Under the control of the scheduler, the VM manager either activates or deactivates the app or operates the app.
Stage 916: The app sends a request to its corresponding application server under the monitor of the app security checking module and the interception of the proxy.
Stage 917: The application server returns a response carrying data or contents related to the request, under the monitor of the app security checking module and the interception of the proxy.
Stage 918a: The app requests the app security checking module to terminate the monitoring.
Stage 918b: The app requests the proxy to terminate fetching/intercepting data related to the app.
Stage 919: The proxy stores fetched/intercepted data or contents to a storage device or a data repository.
Stage 920: The app responds to the request of termination.
Stage 921: The proxy responds to the request of termination.
Stage 922: The VM manager responds to the request of termination.
Stage 923: The scheduler stores results of application data gather procedure in the storage device or the data repository.

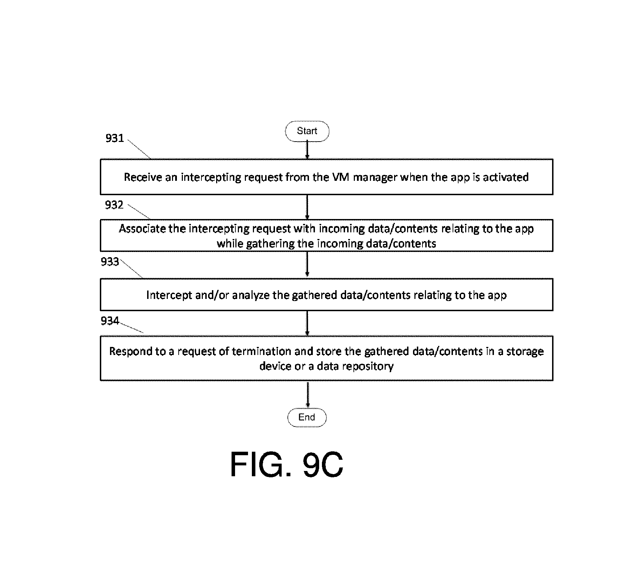

FIG. 9C is a flow chart of the data harvest module 3000 or the proxies shown in FIGS. 7A-7H in fetching/intercepting data/contents relating to an app.
Stage 931: Receive an intercepting request from the VM manager when the app is activated. Note that the intercepting request may include an app's identity.
Stage 932: Associate the intercepting request with incoming data/contents relating to the app while gathering the incoming data/contents. Note that the incoming data or contents may be associated in the form of stacks.
Stage 933: Intercept or/and analyze the gathered data/contents relating to the app.
Stage 934: Respond to a request of termination and store the gathered data/contents in a storage device or a data repository.

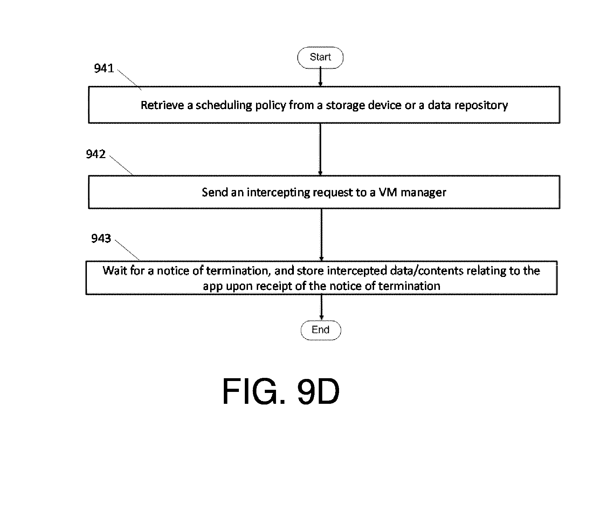

FIG. 9D illustrates a flow chart of a scheduler according to an embodiment.
Stage 941: Retrieve a scheduling policy from a storage device or a data repository. Note that a timer event (e.g., establishing a timestamp) may be invoked while retrieving the scheduling policy.
Stage 942: Send an intercepting request to a VM manager.
Stage 943: Wait for a notice of termination, and store intercepted data/contents relating to the app upon receipt of the notice of termination.

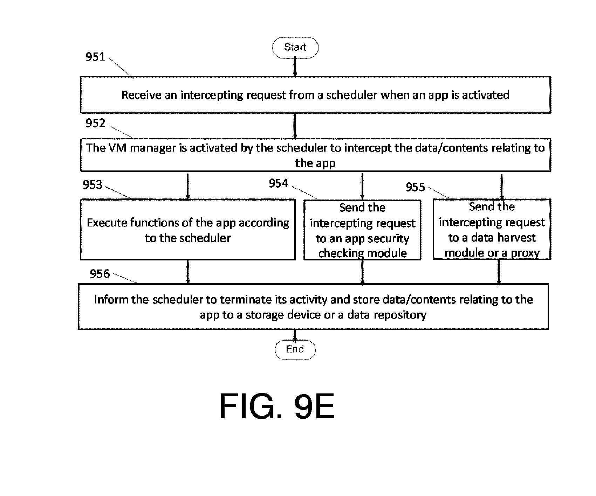

FIG. 9E is a flow chart of a VM manager (robot) according to an embodiment.
Stage 951: Receive an intercepting request from a scheduler when an app is activated, where the intercepting request is for intercepting data/contents relating to the app.
Stage 952: The VM manager is activated by the scheduler to intercept the data/contents relating to the app.
Stage 953: Execute functions of the app according to the scheduler.
Stage 954: Send the intercepting request to an app security checking module.
Stage 955: Send the intercepting request to a data harvest module or a proxy.
Stage 956: Inform the scheduler to terminate its activity and store data/contents relating to the app to a storage device or a data repository.

The present invention discloses another method of searching applications. The method includes the step of executing at least one application. The application may be executed in an environment on which it was intended to run or on a virtual machine. When the applications are executed, corresponding application data is generated. Application data can be received from corresponding application server and/or created by the application itself. The application data can be static or dynamic based on how the application operates. The application data can be stored in a storage device such as a database or a memory of the present system. Interface, such as a web search field, can then be provided to allow users to input their search queries. When a user query is received, a search is conducted to identify application data relevant to the queries. If relevant application data are identified, information regarding the applications corresponding to those relevant application data is transmitted to the querying user.

One skill in the art understands that the search method associated with the application is similar to the search method in the context of the apps, which was described in detail previously. Therefore, all the embodiments, methods, systems and components relating to apps apply to applications.

## Claims

1. A system for searching for software applications, comprising:
one or more software applications;
one or more servers configured to execute the one or more software applications;
one or more schedulers configured to schedule the one or more servers to execute the one or more software applications according to a scheduling policy;
one or more databases;
one or more computer programs configured to collect application data of the one or more software applications and to store the collected application data in the one or more databases; and
one or more search engines configured to provide search services for searching for software applications using the application data collected and stored in the one or more databases.

2. The system of claim 1, wherein the one or more computer programs further comprises a robot module configured to simulate user behaviors to execute the one or more software applications for at least one of generating and receiving the application data.

3. The system of claim 2, wherein the robot module simulates the user behaviors by recording behaviors of actual users who operate the one or more software applications.

4. The system of claim 1, wherein the one or more computer programs further comprises a data gathering proxy configured to fetch or cache the application data of the one or more software applications.

5. The system of claim 1, further comprising:
a wrapper, configured to provide input events and/or instructions for executing the one or more software applications.

6. The system of claim 5, wherein the wrapper is further configured to wrap the one or more software applications with an API for aiding the one or more servers to execute the one or more software applications.

7. The system of claim 1, further comprising:
a runner API, configured to aid a virtual machine of the one or more servers to execute the one or more software applications.

8. The system of claim 1, further comprising:
a hypervisor module, configured to control a virtual machine executing the one or more software applications.

9. The system of claim 1, wherein the one or more software applications comprises a mobile app, a web application, an extension, or a plug-in capable of being executed on a personal computer.

10. The system of claim 1, wherein the one or more computer programs further comprises one or more robot modules, and the one or more schedulers are further configured to schedule the one or more robot modules based on the scheduling policy.

11. The system of claim 1, wherein the scheduling policy is generated by analyzing at least one of an execution frequency, an execution order, an execution length and an execution priority of the one or more software applications.

12. The system of claim 1, wherein the scheduler is further configured to analyze at least one of an execution frequency and category of one or more software applications to define the scheduling policy.

13. A method for searching for software applications, comprising:
scheduling one or more software applications for execution according to a scheduling policy;
executing the one or more software applications according to the scheduling policy;
collecting application data from the one or more software applications;
storing the collected application data;
receiving a query;
searching the stored application data; and
transmitting information regarding software applications whose corresponding stored application data is relevant to the query.

14. The method of claim 13, further comprising a step of:
simulating user behaviors to execute the one or more software applications to generate the application data.

15. The method of claim 14, wherein the step of simulating comprising:
analyzing interfaces of the one or more software applications.

16. The method of claim 15, wherein the step of analyzing further comprises:
randomly probing the interfaces of the one or more software applications.

17. The method of claim 14, wherein the step of simulating comprises:
simulating the user behaviors by recording behaviors of humane users who operate the one or more software applications.

18. The method of claim 13, further comprising:
fetching the application data of the one or more software applications; and
storing the fetched and cached application data.

19. The method of claim 13, further comprising:
wrapping the one or more software applications with an application runner API for aiding execution of the one or more software applications.

20. The method of claim 13, wherein the one or more software applications comprise a mobile app, a web application, an extension, and/or a plug-in capable of being executed on a personal computer.

21. The method of claim 13, wherein the step of scheduling further comprises scheduling one or more robot modules to execute the one or more software applications according to the scheduling policy.

22. A method for searching for applications, comprising the steps of:
scheduling at least one software application for execution according to a scheduling policy;
executing the at least one software application;
collecting application data from at least one software application;
storing the collected application data;
receiving a query;
searching the stored application data; and
transmitting information regarding software applications whose corresponding stored application data is relevant to the query.

23. The method of claim 22 wherein the step of executing comprises:
executing the at least one software application on a virtual machine.

24. The method of claim 22 wherein the step of executing comprises:
executing the at least one software application via a user command, module, program, script or robot.

25. The method of claim 22, wherein the at least one software application comprises at least one of an app, a web app, an extension and a plug-in capable of being executed on a smart device or a computing device.

26. A method for searching for applications, comprising the steps of:
collecting data from one or more software applications or application servers;
storing the collected data;
receiving a query;
searching the stored data; and
transmitting information regarding software applications whose corresponding collected data is relevant to the query.

27. The method of claim 26, wherein the step of collecting further comprises:
directing the one or more software applications or the one or more application servers to transfer the data.

28. The method of claim 26 further comprising:
analyzing the one or more software applications to find a URL/URI of the application server for collecting the data.
